# EUROPEAN PATENT APPLICATION

(11) **EP 2 704 236 A2**
(43) Date of publication of application: **05.03.2014**
(21) Application number: 12776743.2
(22) Date of filing: 25.04.2012
(51) Int. Cl.: H01M 4/48, H01M 10/052, H01M 4/505, H01M 4/525, H01M 4/1391

(54) **POSITIVE ELECTRODE ACTIVE MATERIAL FOR A RECHARGEABLE LITHIUM BATTERY, METHOD FOR PREPARING SAME AND RECHARGEABLE LITHIUM BATTERY INCLUDING SAME**

(30) Priority: 26.04.2011 KR 20110039092
(71) Applicant: Unist Academy-Industry Research Corporation, Ulsan 689-798 (KR)
(72) Inventor: CHO, Jae-Phil, Ulju-gun Ulsan 689-805 (KR); CHO, Yong-Hyun, Ulju-gun Ulsan 689-786 (KR)
(74) Representative: Stolmár & Partner
(86) International application number: PCT/KR2012/003173
(87) International publication number: WO 2012/148157

(57) **Abstract**

Disclosed are a positive active material for a rechargeable lithium battery that includes: a core including a lithium metal composite oxide having a layered structure; and a shell including a lithium metal composite oxide having a layered structure and having a different composition from the core, a lithium metal composite oxide having a spinel structure, or a combination thereof, wherein the shell is positioned on the surface of the core, a method of preparing the same, and a rechargeable lithium battery including the same.

## Description

### BACKGROUND OF THE INVENTION

### (a) Field of the Invention

This disclosure relates to a positive active material for a rechargeable lithium battery, a method of preparing the same, and a rechargeable lithium battery including the same.

### (b) Description of the Related Art

A battery generates electric power using an electrochemical reaction material (referred to hereinafter simply as an "active material") for a positive electrode and a negative electrode. Examples of such a battery is a lithium rechargeable battery that generates electrical energy from changes of chemical potential during the intercalation/deintercalation of lithium ions at the positive and negative electrodes.

The lithium rechargeable battery uses materials that reversibly intercalate or deintercalate lithium ions during charge and discharge reactions for both positive and negative active materials, and contains an organic electrolyte or a polymer electrolyte between the positive electrode and the negative electrode.

For a negative active material of a rechargeable lithium battery, various carbon-based materials such as artificial graphite, natural graphite, and hard carbon, which intercalate and deintercalate lithium ions, have been used.

For a positive active material for a rechargeable lithium battery, composite metal oxides such as LiCoO₂, LiMn₂O₄, LiNiO₂, LiNi₁₋ₓCOₓO₂ (0<x<1), LiMnO₂, LiFePO₄, and the like have been researched.

### SUMMARY OF THE INVENTION

One embodiment of the present invention provides a positive active material for a rechargeable lithium battery having improved output characteristics, capacity characteristics, thermal stability, and cycle-life characteristics.

Another embodiment of the present invention provides a method of preparing the positive active material for a rechargeable lithium battery.

Yet another embodiment of the present invention provides a rechargeable lithium battery including the positive active material for a rechargeable lithium battery.

A positive active material for a rechargeable lithium battery according to one embodiment of the present invention includes: a core including a lithium metal composite oxide having a layered structure; and a shell including a lithium metal composite oxide having a layered structure and having a different composition from the core, a lithium metal composite oxide having a spinel structure, or a combination thereof. Herein, the shell is positioned on the surface of the core.

Specifically, the shell may include the lithium metal composite oxide having a spinel structure.

The lithium metal composite oxide having a layered structure included in the core may be a compound represented by the following Chemical Formula 1.

The lithium metal composite oxide having a layered structure included in the shell may be a compound represented by the following Chemical Formula 2, and the lithium metal composite oxide having a spinel structure included in the shell may be a compound represented by the following Chemical Formula 3.

[Chemical Formula 1] Liₖ₁M¹_{1-x1-y1} M²ₓ₁ M³_{y1}Oₙ₁

[Chemical Formula 2] Liₖ₂M¹_{1-x2-y2}M²ₓ₂M³_{y2}Oₙ₂

[Chemical Formula 3] Liₖ₃[M¹_{1-x3-y3}M²ₓ₃M³_{y3}]ₘ₃Oₙ₃

In the above Chemical Formulae 1 to 3,
M¹ to M³ are different and are each independently Ni, Co, Mn, Al, Mg, Ba, Ti, V, Zr, Fe, Cu, or Sr,
0.98≤k1≤1.02, 0≤x1 <0.2, 0≤y1 <0.3, 0<x1+y1<0.5, and 1.98≤n1≤2,
0.98≤k2≤1.02, 0≤x2<0.2, 0<y2<0.5, 0<x2+y2<0.7, y2>y1, and 1.98≤n2≤2, and
0.98≤k3≤1.02, 0≤x3≤0.15, 0.55≤y3≤0.75, 1.98≤m3≤2, and 3.98≤n3≤4.

Specifically, the M¹ may be Ni, and the M² and M³ are different and are each independently Co, Mn, Al, Mg, Ba, Ti, V, Zr, Fe, Cu, or Sr.

More specifically, the M¹ may be Ni, the M² may be Co, and the M³ may be Mn.

The core may have a spherical shape, an oval shape, or a combination thereof.

The core may have an average diameter of about 5 µm to about 15 µm.

In the positive active material for a rechargeable lithium battery, the compound included in the shell may have a concentration gradient. Herein, in the compound of the shell, a concentration of the M¹ may decrease from a core side to an outer surface, and a concentration of the M³ may increase from a core to an outer surface.

The shell may have a thickness of about 100 nm to about 700 nm.

According to another embodiment of the present invention, a method of preparing a positive active material for a rechargeable lithium battery includes: preparing a core precursor including a compound represented by the following Chemical Formula 4; mixing a shell precursor including a water-soluble metal salt including M², M³, or a combination thereof (wherein M² and M³ are different from each other and are independently Ni, Co, Mn, Al, Mg, Ba, Ti, V, Zr, Fe, Cu, or Sr), a capping agent, and a solvent to prepare a coating composition; mixing the core precursor with the coating composition to form a mixture; heat-treating the mixture to form a core-shell precursor; and mixing the core-shell precursor with a lithium source and firing the mixture.

[Chemical Formula 4] M¹_{1-x1-y1}M²ₓ₁M³_{y1}(OH)₂

In the above Chemical Formula 4,
M¹ to M³ are different and are each independently Ni, Co, Mn, Al, Mg, Ba, Ti, V, Zr, Fe, Cu, or Sr,
0≤x1<0.2, 0≤y1 <0.3, and 0<x1 +y1<0.5.

The water-soluble metal salt may include compounds represented by the following Chemical Formulae 5 to 10 or a combination thereof.

[Chemical Formula 5] M²(CH₃COO)_{z1}

[Chemical Formula 6] M³(CH₃COO)_{z2}

[Chemical Formula 7] M²(NO₃)_{z3}

[Chemical Formula 8] M³(NO₃)_{z4}

[Chemical Formula 9] M²(SO₄)_{z5}

[Chemical Formula 10] M³(SO₄)_{z6}

In the above Chemical Formulae 5 to 10,
M² and M³ are different and are each independently Ni, Co, Mn, Al, Mg, Ba, Ti, V, Zr, Fe, Cu, or Sr, 2≤z1≤3, 2≤z2≤3, 1≤z3≤3, 1≤z4≤3, 1≤z5≤3, and 1≤z6≤3.

In the process of preparing the coating composition, the shell precursor may be mixed in an amount of greater than or equal to about 10 parts by weight and less than 30 parts by weight based on 100 parts by weight of the core precursor.

In the process of preparing the coating composition, the shell precursor may be mixed in an amount of about 30 parts by weight to about 80 parts by weight based on 100 parts by weight of the core precursor.

The capping agent may include polyacrylic acid (PAA), poly(vinylpyrrolidone), or a combination thereof.

The solvent may include water, alcohol, or a combination thereof.

The heat-treating may be performed at a temperature of about 250 °C to about 600 °C.

The firing may be performed at a temperature of about 750 °C to about 900 °C.

According to yet another embodiment, a rechargeable lithium battery includes: a positive electrode including the positive active material; a negative electrode including a negative active material; and an electrolyte.

Other embodiments of the present invention are described in the following detailed description.

The positive active material for a rechargeable lithium battery according to one embodiment of the present invention has excellent output characteristics, capacity characteristics, thermal stability, and cycle-life characteristics due to a core-shell structure.

### BRIEF DESCRIPTION OF THE DRAWINGS

FIG. 1 is a cross-sectional view of a positive active material for a rechargeable lithium battery according to one embodiment.
FIG. 2 shows a preparation process of a positive active material for a rechargeable lithium battery according to one embodiment.
FIG. 3 is a schematic view showing a structure of a rechargeable lithium battery according to one embodiment.
FIG. 4A is a SEM (scanning electron microscope) photograph of the positive active material for a rechargeable lithium battery according to Example 2, and FIG. 4B is a SEM photograph of the positive active material for a rechargeable lithium battery according to Comparative Example 2.
FIG. 5 is a nano-SIMS Mn element mapping photograph of the positive active material for a rechargeable lithium battery according to Example 2.
FIG. 6 is a graph showing XRD diffraction patterns of the positive active material for a rechargeable lithium battery according to Example 1 and Comparative Example 1.
FIG. 7A is a TEM (transmission electron microscope) photograph showing a cross-section of the positive active material powder particle for a rechargeable lithium battery according to Example 2.
FIG. 7B is a TEM photograph showing a cross-section of a primary particle positioned at the surface of the positive active material powder for a rechargeable lithium battery according to Example 2.
FIG. 7C is a 10-times enlarged view of the No. 1 position of FIG. 7B.
FIG. 7D is a 5-times enlarged view of the No. 2 position of FIG. 7B.
FIG. 7E is a 10-times enlarged view of the No. 3 position of FIG. 7B.
FIG. 7F is a 5-times enlarged view of the No. 4 position of FIG. 7B.
FIG. 8A is a graph showing discharge capacity of coin-type half cells depending on a cycle number according to Example 3, Example 4, and Comparative Example 4.
FIG. 8B is a graph showing discharge capacity of the coin-type half cells depending on a cycle number according to Example 4, Comparative Example 4, and Comparative Example 5.
FIG. 9 is a graph showing rate capability of the coin-type half cell according to Example 4, Comparative Example 4, and Comparative Example 5.
FIG. 10 is a graph showing DSC (differential scanning calorimetry) of the coin-type half cells according to Example 4 and Comparative Examples 4 to 6.

### DETAILED DESCRIPTION

Hereinafter, exemplary embodiments of the present invention will be described in detail so that a person skilled in the art can understand the same. However, these embodiments are exemplary, and this disclosure is not limited thereto.

In the drawings, the thickness of layers, films, panels, regions, etc., are exaggerated for clarity. Like reference numerals designate like elements throughout the specification.

It will be understood that when an element such as a layer, film, region, or substrate is referred to as being "on" another element, it may be directly on the other element or intervening elements may also be present. In contrast, when an element is referred to as being "directly on" another element, there are no intervening elements present.

A positive active material for a rechargeable lithium battery according to one embodiment of the present invention includes a core including a lithium metal composite oxide having a layered structure, and a shell including a lithium metal composite oxide having a layered structure and having a different composition from the core, a lithium metal composite oxide having a spinel structure, or a combination thereof. Herein, the shell is positioned on the surface of the core.

Specifically, the shell may include the lithium metal composite oxide having a spinel structure.

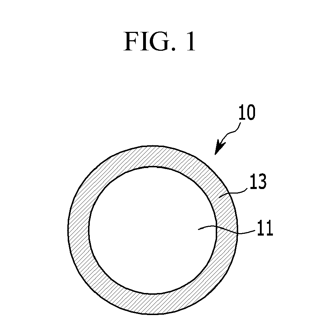

Hereinafter, referring to FIG. 1, a positive active material 10 for a rechargeable lithium battery according to one embodiment of the present invention is described.

FIG. 1 is a cross-sectional view of the positive active material 10 for a rechargeable lithium battery according to one embodiment of the present invention. In FIG. 1, the positive active material 10 for a rechargeable lithium battery has a spherical shape, but it is not limited thereto, and the positive active material for a rechargeable lithium battery may be formed in various shapes such as an oval shape.

Referring to FIG. 1, the positive active material 10 for a rechargeable lithium battery according to one embodiment of the present invention includes a core 11 including a lithium metal composite oxide having a layered structure, and a shell 13 including a lithium metal composite oxide having a layered structure and having a different composition from the core, a lithium metal composite oxide having a spinel structure, or a combination thereof.

The lithium metal composite oxide having a layered structure in the core 11 may be a compound represented by the following Chemical Formula 1.

The lithium metal composite oxide having a layered structure in the shell 13 may be a compound represented by the following Chemical Formula 2, and the lithium metal composite oxide having a spinel structure in the shell 13 may be a compound represented by the following Chemical Formula 3.

[Chemical Formula 1] Liₖ₁M¹_{1-x1-y1} M²ₓ₁M³_{y1}Oₙ₁

In the above Chemical Formula 1,
M¹ to M³ are different and are each independently Ni, Co, Mn, Al, Mg, Ba, Ti, V, Zr, Fe, Cu, or Sr, and specifically the M¹ may be Ni, and the M² and M³ may be Co, Mn, Al, Mg, Ba, Ti, V, Zr, Fe, Cu, or Sr. More specifically, the M¹ may be Ni, the M² may be Co, and the M³ may be Mn.

Further, 0.98≤k1≤1.02, 0≤x1<0.2, 0≤y1<0.3, 0<x1+y1<0.5, and 1.98≤n1≤2, and specifically, 1≤k1≤1.02, 0≤x1≤0.15, 0≤y1<0.25, 0<x1+y1<0.4, and n1=2.

The core 11 may have a structure wherein a primary particle is aggregated to form a secondary particle, without limitation.

When the core 11 includes a compound represented by the above Chemical Formula 1 having a layered structure, high capacity per unit weight may be realized.

[Chemical Formula 2] Liₖ₂M¹_{1-x2-y2}M²ₓ₂M³_{y2}Oₙ₂

In the above Chemical Formula 2,
M¹ to M³ are the same as in the above Chemical Formula 1.

Further, 0.98≤k2≤1.02, 0≤x2<0.2, 0<y2<0.5, 0<x2+y2<0.7, y2>y1, and 1.98≤n2≤2, and specifically, 1≤k2≤1.02, 0≤x2<0.15, 0<y2<0.45, 0<x2+y2<0.6, y2>y1, and n2=2.

For example, the M¹ may be an element capable of reacting with an electrolyte solution directly such as Ni. Herein, when the shell 13 includes a compound represented by the above Chemical Formula 2 having a layered structure, the shell 13 may include M¹ at a lower ratio than the core 11, and thereby effects of the instable M¹ that may react with an electrolyte solution at the surface of the positive active material 10 for a rechargeable lithium battery during charge may be decreased. Therefore, structural stability of the positive active material 10 for a rechargeable lithium battery may increase and excellent capacity characteristics may be maintained, and excellent cycle-life characteristics may be realized at a high temperature even if charge and discharge are repeated. However, appropriate elements for the M¹, M², and M³ of the shell 13 may be selected so as to complement drawbacks of the core 11 without limitation.

[Chemical Formula 3] Liₖ₃[M¹_{1-x3-y3}M²ₓ₃M³_{y3}]ₘ₃Oₙ₃

In the above Chemical Formula 3,
M¹ to M³ are the same as in the above Chemical Formula 1.

Further, 0.98≤k3≤1.02, 0≤x3≤0.15, 0.55≤y3≤0.75, 1.98≤m3≤2, and 3.98≤n3≤4, and specifically 1≤k3≤1.02, 0.1≤x3≤0.15, 0.55≤y3≤0.65, m3=2, and n3=4.

The shell 13 may have a structure where a primary particle is aggregated to form a secondary particle, without limitation.

When the shell 13 includes the compound represented by the above Chemical Formula 3 having a spinel structure, thermal characteristics, and specifically thermal stability of the positive active material 10 for a rechargeable lithium battery, may be improved.

For example, the M¹ may be an element capable of reacting with an electrolyte solution directly such as Ni, and when the shell 13 includes the compound represented by the above Chemical Formula 3 having a spinel structure, the shell 13 may include the M¹ at a lower ratio than in the core 11. Thereby, the positive active material 10 for a rechargeable lithium battery may decrease effects of the instable M¹ that may react with an electrolyte solution at the surface during charge. Therefore, structural stability of the positive active material 10 for a rechargeable lithium battery may be increased and excellent capacity characteristics may be maintained even if charge and discharge are repeated, and an excellent cycle-life characteristics may be realized at a high temperature. However, appropriate elements for the M¹, M², and M³ of the shell 13 may be selected so as to complement drawbacks of the core 11 without limitation.

The positive active material 10 for a rechargeable lithium battery may have excellent properties of the core 11 and the shell 13 due to the core 11 and the shell 13. Thereby, various properties of a rechargeable lithium battery including the positive active material 10 for a rechargeable lithium battery may be effectively improved. Specifically, a rechargeable lithium battery including the positive active material 10 for a rechargeable lithium battery may have excellent output characteristics, capacity characteristics, thermal stability, and cycle-life characteristics.

For example, when the core 11 uses a material having excellent capacity characteristics and the shell 13 uses a material having excellent output characteristics, cycle-life characteristics, and thermal stability, a rechargeable lithium battery including the positive active material 10 for a rechargeable lithium battery improves capacity characteristics and simultaneously improves output characteristics, cycle-life characteristics, and thermal stability. However, the material of the core 11 and the material of the shell 13 are not limited thereto, and may selectively include materials having various electrochemical properties and physical properties. Thereby, the positive active material 10 for a rechargeable lithium battery may have merits to effectively realize desired various properties.

The core 11 and the positive active material 10 for a rechargeable lithium battery may have a spherical shape, an oval shape, or a combination thereof, but are not limited thereto.

The core 11 may have an average diameter of about 5 µm to about 15 µm. When the core 11 has an average diameter within the range, the shell 13 having a thickness of hundreds of nanometers may be effectively formed, and thereby capacity characteristics and thermal stability may be effectively improved. Specifically, the core 11 may have an average diameter of about 7 µm to about 12 µm, and more specifically about 9 µm to about 10 µm.

In the positive active material 10 for a rechargeable lithium battery, the compound in the shell 13 may have a concentration gradient. Specifically, in the compound represented by the above Chemical Formula 2, the compound represented by the above Chemical Formula 3, or a combination thereof, in the shell 13, a concentration of the M¹ may decrease from a core side to an outer surface, and a concentration of the M³ may increase from a core side to an outer surface. In this case, when M¹ is, for example, an element capable of reacting with an electrolyte solution directly such as Ni, effects of instable M¹ that may react with an electrolyte solution at the surface of the positive active material 10 for a rechargeable lithium battery during charge may be decreased. Therefore, the positive active material 10 for a rechargeable lithium battery has high structural stability, and thus excellent capacity characteristics may be maintained, and excellent cycle-life characteristics may be realized at a high temperature even if charge and discharge are repeated. However, appropriate elements for the M¹, M², and M³ of the shell 13 may be selected so as to complement drawbacks of the core 11 without limitation.

The shell 13 may have a thickness of about 100 nm to about 700 nm. When the shell 13 has a thickness within the range, improved charge mobility efficiency between the core 11 and shell 13 may be maintained, and thermal stability may be effectively improved during charge and discharge. Specifically, the shell 13 may have a thickness of about 200 nm to about 500 nm.

The positive active material 10 for a rechargeable lithium battery may have an average diameter of about 5 µm to about 20 µm. When the positive active material 10 for a rechargeable lithium battery has an average diameter within the range, a positive electrode for a rechargeable lithium battery having high density and high capacity per unit volume may be realized. Specifically the positive active material 10 for a rechargeable lithium battery may have an average diameter of about 7 µm to about 13 µm, and more specifically about 9 µm to about 11 µm.

According to another embodiment of the present invention, a method of preparing a positive active material for a rechargeable lithium battery includes: preparing a core precursor including a compound represented by the following Chemical Formula 4; mixing a shell precursor including a water-soluble metal salt including M², M³, or a combination thereof (wherein M² and M³ are different from each other and are independently Ni, Co, Mn, Al, Mg, Ba, Ti, V, Zr, Fe, Cu, or Sr), a capping agent, and a solvent to prepare a coating composition; mixing the core precursor with the coating composition to form a mixture; heat-treating the mixture to form a core-shell precursor; and mixing the core-shell precursor with a lithium source and firing the mixture.

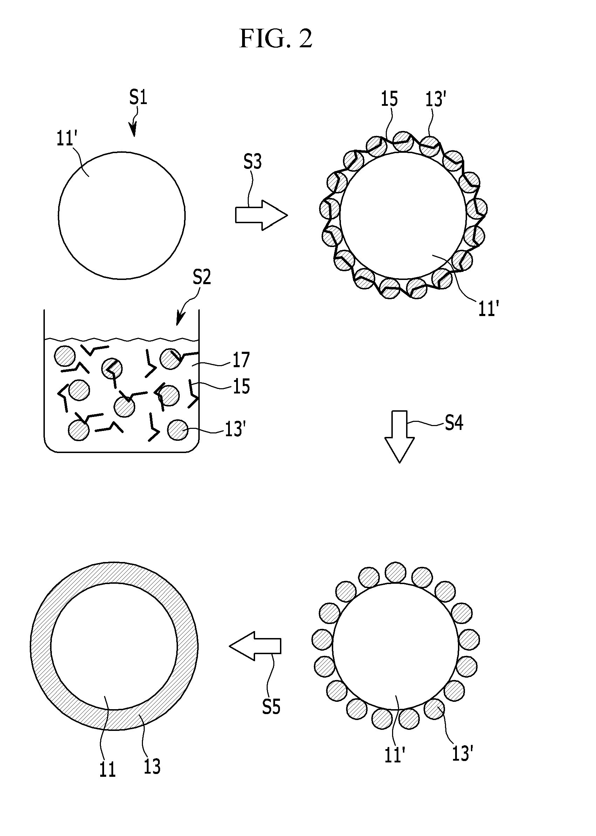

Hereinafter, referring to FIG. 2, a method of preparing a positive active material for a rechargeable lithium battery according to one embodiment of the present invention is described.

FIG. 2 shows a preparation process of a positive active material for a rechargeable lithium battery according to one embodiment of the present invention. A positive active material for a rechargeable lithium battery prepared in FIG. 2 has a spherical shape, but the positive active material for a rechargeable lithium battery may have various shapes such as an oval shape and the like.

Hereinafter, when description is not otherwise provided, the core, shell, and positive active material for a rechargeable lithium battery are the same as described above.

First, a core precursor 11' including a compound represented by the following Chemical Formula 4 is prepared (S1).

[Chemical Formula 4] M¹_{1-x1-y1} M²ₓ₁M³_{y1}(OH)₂

In the above Chemical Formula 4,
M¹ to M³, x1, and y1 are the same as in the above Chemical Formula 1.

The core precursor 11' may form the core 11 including the compound represented by the above Chemical Formula 1 after subsequent processes are undertaken.

Subsequently, a shell precursor 13' including a water-soluble metal salt including M², M³, or a combination thereof (wherein M² and M³ are different from each other and are independently Ni, Co, Mn, Al, Mg, Ba, Ti, V, Zr, Fe, Cu, or Sr), a capping agent 15, and a solvent 17 are mixed to prepare a coating composition (S2).

Specifically, the water-soluble metal salt may be a metal acetate, a metal nitrate, a metal sulfate, or a combination thereof, and more specifically compounds represented by the following Chemical Formulae 5 to 10, or a combination thereof, but is not limited thereto.

[Chemical Formula 5] M²(CH₃COO)_{z1}

[Chemical Formula 6] M³(CH₃COO)_{z2}

[Chemical Formula 7] M²(NO₃)_{z3}

[Chemical Formula 8] M³(NO₃)_{z4}

[Chemical Formula 9] M²(SO₄)_{z5}

[Chemical Formula 10] M³(SO₄)_{z6}

In the above Chemical Formulae 5 to 10,
M² and M³ are different and are each independently Ni, Co, Mn, Al, Mg, Ba, Ti, V, Zr, Fe, Cu, or Sr,
2≤z1≤3, 2≤z2≤3, 1≤z3≤3, 1≤z4≤3, 1≤z5≤3, and 1≤z6≤3.

The shell precursor 13' may form the shell including the compound represented by the above Chemical Formula 2, the compound represented by the above Chemical Formula 3, or a combination thereof after subsequent processes are undertaken. This is a result obtained by substituting M¹ of the compound represented by the above Chemical Formula 4 included in the core precursor 11' with M² and M³ of the compound of the above Chemical Formulae 5 to 10, outside the core precursor 11'.

In the process of preparing the coating composition, the shell precursor 13' may be mixed in an amount of greater than or equal to about 10 parts by weight and less than about 30 parts by weight based on 100 parts by weight of the core precursor. When the use amount of the shell precursor 13' is within the range, the shell 13 formed by the subsequent processes may include the compound represented by the above Chemical Formula 2. Specifically, the shell precursor 13' may be mixed in an amount of greater than or equal to about 25 parts by weight and less than about 30 parts by weight based on 100 parts by weight of the core precursor.

In the process of preparing the coating composition, the shell precursor 13' may be mixed in an amount of about 30 parts by weight to about 80 parts by weight based on 100 parts by weight of the core precursor. When the use amount of the shell precursor 13' is within the range, the shell 13 formed by the subsequent processes may include the compound represented by the above Chemical Formula 3. Specifically the shell precursor 13' may be mixed in an amount of greater than or equal to about 70 parts by weight and less than about 80 parts by weight based on 100 parts by weight of the core precursor.

The capping agent 15 caps the shell precursor 13' and plays a role of uniformly distributing the core precursor 11' at the surface.

Specifically, the capping agent 15 may be a polymer having a hydrophilic functional group, and may include polyacrylic acid (PAA), poly(vinylpyrrolidone), or a combination thereof, but is not limited thereto.

The solvent 17 may disperse the shell precursor 13' and the capping agent 15, dissolve them, and makes them mix with each other.

Specifically the solvent 17 may include water, alcohol, or a combination thereof, but is not limited thereto.

The coating composition may be prepared at a temperate of about 30 °C to about 80 °C. In this case, the shell precursor 13' and the capping agent 15 may be uniformly dispersed in a short time. Specifically, the coating composition may be prepared at a temperate of about 40 °C to about 50 °C.

Subsequently, the core precursor 11' is mixed with the coating composition to form a mixture (S3).

Herein, the shell precursor 13' capped with the capping agent 15 may be uniformly arranged at the surface of the core precursor 11'.

Subsequently, the mixture is heat-treated to form a core-shell precursor (S4).

Herein, the capping agent 15 is decomposed and evaporated, and the shell precursor 13' is fixed at the surface of the core precursor 11'.

The heat-treating may be performed at a temperature of about 250 °C to about 600 °C. When the heat-treating is performed within the temperature range, the capping agent 15 may be decomposed well. Specifically, heat-treating may be performed at a temperature of about 350 °C to about 600 °C, and more specifically about 400 °C to about 450 °C.

Subsequently, the core-shell precursor is mixed with a lithium source and then fired (S5).

Herein, the lithium source reacts with the core precursor 11', to form a core 1.

In addition, the element of the shell precursor 13' substitutes a part of the element of the core precursor 11', and the core precursor 11' substituted with the element of the shell precursor 13' reacts with the lithium source to form the shell 13.

The lithium source may include lithium nitrate (LiNO₃), lithium acetate (LiCH₃COOH), lithium carbonate (Li₂CO₃), lithium hydroxide (LiOH·H₂O), or a combination thereof, but is not limited thereto.

The core-shell precursor and the lithium source may be mixed in a mole ratio of about 1:1 to about 1:1.03. When the core-shell precursor and lithium source are mixed within the mole ratio, the lithium and core-shell precursor may uniformly react with each other. Specifically, the core-shell precursor and the lithium source may be mixed in a mole ratio of about 1:1.02 to about 1:1.03.

The firing may be performed at a temperature of about 750 °C to about 900 °C for about 14 hours to about 20 hours. When the firing is performed within the temperature range, the reaction between the lithium and the core-shell precursor is uniformly performed to provide high crystallinity. Specifically, the firing may be performed at a temperature of about 750 °C to about 800 °C for about 16 hours to about 18 hours.

In the method of preparing the positive active material for a rechargeable lithium battery, uses of the complex agent, for example ammonia an aqueous solution, the pH controlling agent, for example an alkali aqueous solution for providing a hydroxyl group, and the heat-treating atmosphere are well known in this art and thus descriptions thereof are omitted.

A positive active material for a rechargeable lithium battery may be prepared according to the method according to one embodiment of the present invention.

The positive active material for a rechargeable lithium battery may be usefully used in a positive electrode for an electrochemical cell such as a rechargeable lithium battery. The rechargeable lithium battery includes the positive electrode, a negative electrode including a negative active material, and an electrolyte.

The positive electrode includes a current collector and a positive active material layer formed on the current collector.

The positive active material layer includes a binder and a conductive material.

The binder improves binding properties of positive active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves conductivity of an electrode. Any electrically conductive material may be used as a conductive material, unless it causes a chemical change. Examples thereof may be natural graphite, artificial graphite, carbon black, acetylene black, ketjen black, a carbon fiber, a metal powder, or a metal fiber of copper, nickel, aluminum, silver, and the like, and one or more kinds of a conductive material such as a polyphenylene derivative and the like may be mixed.

The current collector may be Al, but is not limited thereto.

The negative electrode includes a current collector and a negative active material layer formed on the current collector, and the negative active material layer includes a negative active material.

The negative active material may include a material that reversibly intercalates/deintercalates lithium ions, a lithium metal, a lithium metal alloy, a material being capable of doping and dedoping lithium, or a transition metal oxide.

The material that reversibly intercalates/deintercalates lithium ions is a carbon material, and may be any generally-used carbon-based negative active material in a rechargeable lithium ion battery, and examples thereof may be crystalline carbon, amorphous carbon, or a combination thereof. Examples of the crystalline carbon may be a graphite such as a shapeless, sheet-shaped, flake-shaped, spherical-shaped, or fiber-shaped natural graphite or artificial graphite, and examples of the amorphous carbon may be a soft carbon (low temperature fired carbon), a hard carbon, a mesophase pitch carbonized product, fired cokes, and the like.

The lithium metal alloy may include an alloy of lithium and a metal of Na, K, Rb, Cs, Fr, Be, Mg, Ca, Sr, Si, Sb, Pb, In, Zn, Ba, Ra, Ge, Al, or Sn.

The material being capable of doping and dedoping lithium may be Si, SiOₓ (0 < x < 2), a Si-M alloy (wherein M is an alkali metal, an alkaline-earth metal, Group 13 to 16 elements, a transition metal, a rare earth element, or a combination thereof, and not Si), Sn, SnO₂, Sn-M (wherein M is an alkali metal, an alkaline-earth metal, Group 13 to 16 elements, a transition metal, a rare earth element, or a combination thereof, and not Si), and the like. At least one of these may be mixed with SiO₂. The element M may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The transition metal oxide may be vanadium oxide, lithium vanadium oxide, and the like.

The negative active material layer may include a binder, and optionally a conductive material.

The binder improves binding properties of negative active material particles with one another and with a current collector, and examples thereof may be polyvinyl alcohol, carboxylmethyl cellulose, hydroxypropyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves electrical conductivity of an electrode. Any electrically conductive material may be used as a conductive material, unless it causes a chemical change. Examples thereof may be a carbon-based material such as natural graphite, artificial graphite, carbon black, acetylene black, ketjen black, carbon fiber, and the like; a metal-based material such as a metal powder or a metal fiber and the like of copper, nickel, aluminum, silver, and the like; a conductive polymer such as a polyphenylene derivative and the like; or mixture thereof.

The current collector may be a copper foil, a nickel foil, a stainless steel foil, a titanium foil, a nickel foam, a copper foam, a polymer substrate coated with a conductive metal, or a combination thereof.

The positive electrode and the negative electrode may be manufactured by mixing an active material, a conductive material, and a binder in a solvent to prepare an active material composition, and coating the composition on a current collector. The electrode manufacturing method is well known, and thus is not described in detail in the present specification. The solvent includes N-methylpyrrolidone and the like, but is not limited thereto.

The electrolyte charged for a rechargeable lithium battery may include a non-aqueous electrolyte, a solid electrolyte, or the like, in which a lithium salt is dissolved.

The solvent for the non-aqueous electrolyte may include a cyclic carbonate such as ethylene carbonate, diethylene carbonate, propylene carbonate, butylene carbonate, vinylene carbonate, and the like, a linear carbonate such as dimethyl carbonate, ethylmethyl carbonate, diethyl carbonate, and the like, esters such as methyl acetate, ethyl acetate, propyl acetate, methyl propionate, ethyl propionate, γ-butyrolactone, and the like, ethers such as 1,2-dimethoxyethane, 1,2-diethoxyethane, tetrahydrofuran, 1,2-dioxane, 2-methyltetrahydrofuran, and the like, nitriles such as acetonitrile, and the like, and amides such as dimethylformamide, and the like, but is not limited thereto. They may be used singularly or in a combination. In particular, the solvent may be a mixed solvent of a cyclic carbonate and a linear carbonate.

The electrolyte may include a gel-type polymer electrolyte prepared by impregnating an electrolyte solution in a polymer electrolyte such as polyethylene oxide, polyacrylonitrile, and the like, or an inorganic solid electrolyte such as Lil and Li₃N, but is not limited thereto.

The lithium salt includes at least one selected from LiPF₆, LiBF₄, LiSbF₆, LiAsF₆, LiClO₄, LiCF₃SO₃, Li(CF₃SO₂)₂N, LiC₄F₉SO₃, LiSbF₆, LiAlO₄, LiAlO₂, LiAlCl₄, LiCl, and Lil, but is not limited thereto.

A separator may be present between the positive electrode and the negative electrode according to kinds of a rechargeable lithium battery. The separator may use polyethylene, polypropylene, polyvinylidene fluoride, or a multi-layer thereof, for example a polyethylene/polypropylene double-layered separator, a polyethylene/polypropylene/polyethylene triple-layered separator, a polypropylene/polyethylene/polypropylene triple-layered separator, and the like.

Rechargeable lithium batteries may be classified as lithium ion batteries, lithium ion polymer batteries, and lithium polymer batteries according to the presence of a separator and the kind of electrolyte used in the battery. The rechargeable lithium batteries may also be classified as cylindrical, prismatic, coin-type, or pouch-type batteries according to shapes, and may be classified as thin film or bulk batteries. Structures and manufacturing methods for lithium ion batteries pertaining to this disclosure are well known in the art.

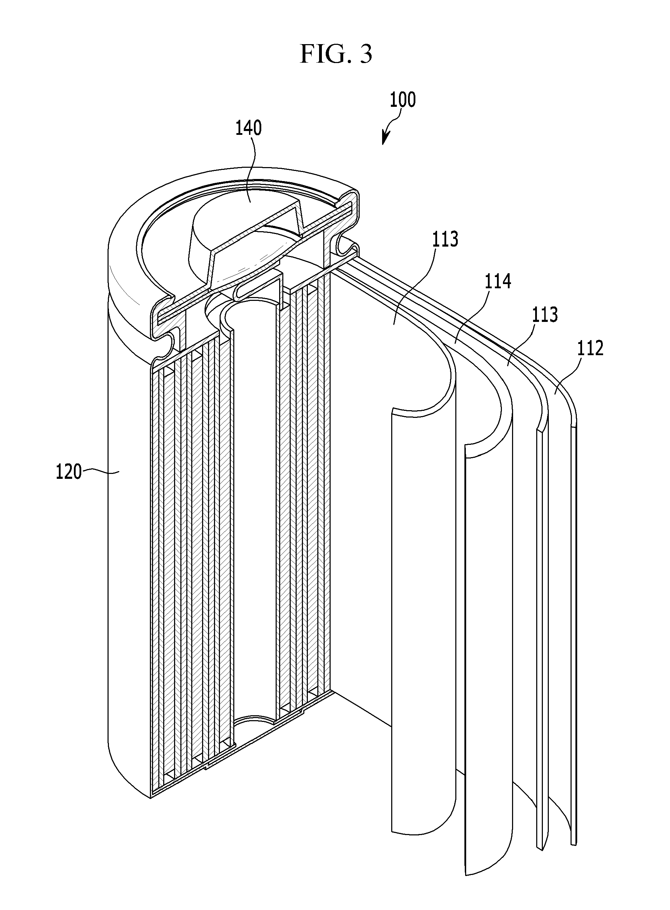

FIG. 3 is a schematic view showing a structure of a rechargeable lithium battery according to one embodiment of the present invention. As shown in FIG. 3, the rechargeable lithium battery 100 includes a negative electrode 112, a positive electrode 114, a separator 113 interposed between the negative electrode 112 and the positive electrode 114, an electrolyte (not shown) impregnated in the negative electrode 112, the positive electrode 114, and the separator 113, a battery case 120, and a sealing member 140 sealing the battery case 120. A shape of a rechargeable lithium battery of the present invention is not particularly limited, and may be any shape such as cylindrical, coin-type, or pouch-type as long as a battery is operable.

Hereinafter, an exemplary embodiment of the present invention and comparative examples will be described, but these examples, however, are not in any sense to be interpreted as limiting the scope of the invention.

### Example 1: Preparation of Positive Active Material for Rechargeable Lithium Battery

5 g of poly(vinylpyrrolidone) was dissolved in 50 ml of deionized water, 3.4 g of Mn(CH₃COO)₂·4H₂O was added thereto, and the mixture was sufficiently agitated.

Subsequently, 9.2 g of Ni_{0.7}Co_{0.15}Mn_{0.15}(OH)₂ was added to the agitated solution, and the mixture was heated at 50 °C and agitated for 24 hours.

The resultant was then dried at 120 °C for 12 hours and heat-treated at 450 °C.

Then, the heat-treated material was mixed with lithium hydroxide (LiOH·H₂O) in a mole ratio of 1:1.03, and the mixture was fired under an air atmosphere at 800 °C for 18 hours.

In this way, a positive active material for a rechargeable lithium battery was prepared. The positive active material for a rechargeable lithium battery had an entire composition of LiNi_{0.62}Co_{0.15}Mn_{0.23}O₂, a core composition of LiNi_{0.7}Co_{0.15}Mn_{0.15}O₂, and a shell composition of LiNi_{0.47}Co_{0.16}Mn_{0.37}O₂.

### Example 2: Preparation of Positive Active Material for Rechargeable Lithium Battery

5 g of poly(vinylpyrrolidone) was dissolved in 50 ml of deionized water, 6.7 g of Mn(CH₃COO)₂·4H₂O was added thereto, and the mixture was sufficiently agitated.

Subsequently, 9.2 g of Ni_{0.7}Co_{0.15}Mn_{0.15}(OH)₂ was added to the agitated solution, and the mixture was heated at 50 °C and agitated for 24 hours.

The resultant was then dried at 120 °C for 12 hours and heat-treated at 450 °C.

Then, the heat-treated material was mixed with lithium hydroxide (LiOH·H₂O) in a mole ratio of 1:1.03, and the mixture was fired under an air atmosphere at 800 °C for 18 hours.

In this way, a positive active material for a rechargeable lithium battery was prepared. The positive active material for a rechargeable lithium battery had an entire composition of LiNi_{0.54}Co_{0.12}Mn_{0.34}O₂, a core composition of LiNi_{0.7}Co_{0.15}Mn_{0.15}O₂, and a shell composition of Li[Ni_{0.3}Co_{0.11}Mn_{0.59}]₂O₄.

### Example 3: Manufacture of Rechargeable Lithium Battery Cell

The positive active material for a rechargeable lithium battery according to Example 1, Super-P as a conductive material, and polyvinylidene fluoride (PVdF) as a binder were respectively mixed in a weight ratio of 94:3:3, preparing a slurry. The slurry was uniformly coated on a 15 µm-thick aluminum film and vacuum-dried at 120 °C, manufacturing a positive electrode.

The positive electrode, a lithium foil as a counter electrode, a porous polyethylene membrane (Celgard 2300, thickness: 25 µm, Celgard LLC) as a separator, and a liquid electrolyte solution prepared by dissolving LiPF₆ in a 1.0 M concentration in a solvent prepared by mixing ethylene carbonate, ethylmethyl carbonate, and dimethylcarbonate in a volume ratio of 3:4:3 were used to manufacture a coin-type half cell in a conventional process.

### Example 4: Manufacture of Rechargeable Lithium Battery Cell

A coin-type half cell was manufactured according to the same method as Example 3, except for using the positive active material for a rechargeable lithium battery according to Example 2.

### Comparative Example 1: Positive Active Material for Rechargeable Lithium Battery

A compound represented by LiNi_{0.7}Co_{0.15}Mn_{0.15}O₂ was used as a positive active material for a rechargeable lithium battery.

### Comparative Example 2: Positive Active Material for Rechargeable Lithium Battery

A compound represented by LiNi_{0.5}Co_{0.2}Mn_{0.3}O₂ was used as a positive active material for a rechargeable lithium battery.

### Comparative Example 3: Positive Active Material for Rechargeable Lithium Battery

A mixture of a compound represented by LiNi_{0.7}Co_{0.15}Mn_{0.15}O₂ and a compound represented by LiMn₂O₄ in a weight ratio of 70:30 was used as a positive active material for a rechargeable lithium battery.

### Comparative Example 4: Manufacture of Rechargeable Lithium Battery Cell

A coin-type half cell was manufactured according to the same method as Example 3, except for using the positive active material for a rechargeable lithium battery according to Comparative Example 1.

### Comparative Example 5: Manufacture of Rechargeable Lithium Battery Cell

A coin-type half cell was manufactured according to the same method as Example 3, except for using the positive active material for a rechargeable lithium battery according to Comparative Example 2.

### Comparative Example 6: Manufacture of Rechargeable Lithium Battery Cell

A coin-type half cell was manufactured according to the same method as Example 3, except for using the positive active material for a rechargeable lithium battery according to Comparative Example 3.

### Experimental Example 1: Scanning Electron Microscope (SEM) Photograph Analysis

The positive active materials for a rechargeable lithium battery according to Examples 1 and 2 and Comparative Examples 1 to 3 were respectively sampled on a carbon tape and then platinum (Pt) plasma-coated, and their SEM photographs were taken.

Herein, a scanning electron microscope (SEM) JSM 6400 (JEOL Ltd.) was used.

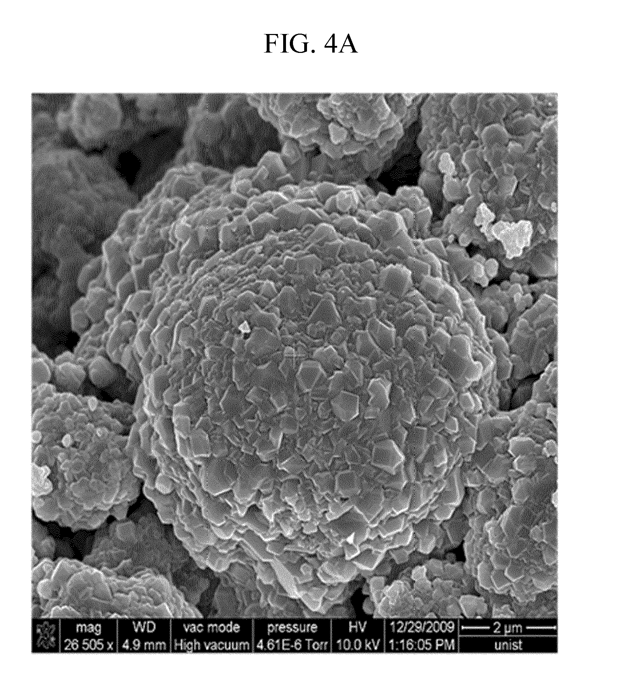

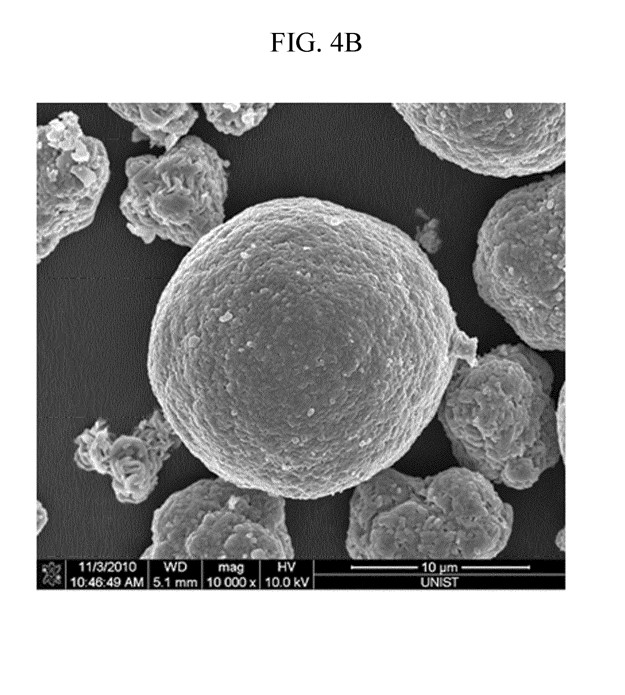

The SEM photograph of the positive active material for a rechargeable lithium battery according to Example 2 is provided in FIG. 4A, and the SEM photograph of the positive active material for a rechargeable lithium battery according to Comparative Example 2 is provided in FIG. 4B.

As shown in FIGS. 4A and 4B, the positive active materials for a rechargeable lithium battery Example 2 had a shell on the surface, while the positive active materials for a rechargeable lithium battery according to Comparative Example 2 had no shell on the surface.

### Experimental Example 2: Inductively-Coupled Plasma-Atomic Emission Spectroscopy (ICP-AES) Analysis

The compositions of the positive active materials for a rechargeable lithium battery according to Examples 1 and 2 and Comparative Examples 1 to 3 were analyzed through inductively coupled plasma-atomic emission spectroscopy (ICP-AES) by using Varian 720-ES equipment (Varian Medical Systems Inc.).

ICP-AES analysis data of the positive active materials for a rechargeable lithium battery according to Examples 1 and 2 and Comparative Example 1 is provided in the following Table 1.

**(Table 1)**

| | Comparative Example 1 | | Example 1 | | Example 2 | |
|---|---|---|---|---|---|---|
| | calculation value (mol%) | measureme nt value (mol%) | calculati on value (mol%) | measureme nt value (mol%) | calculati on value (mol%) | measurem ent value (mol%) |
| [Ni]/[Ni+Co+Mn] | 70 | 69 | 63 | 62 | 55 | 54 |
| [Co]/[Ni+Co+Mn] | 15 | 16 | 13 | 15 | 12 | 12 |
| [Mn]/[Ni+Co+Mn] | 15 | 15 | 24 | 23 | 33 | 34 |

Referring to Table 1, the positive active materials for a rechargeable lithium battery according to Examples 1 and 2 had a different composition from the metal composition of the core precursor, Ni_{0.7}Co_{0.15}Mn_{0.15}(OH)₂.

The positive active materials for a rechargeable lithium battery according to Examples 1 and 2 had a shell having a different composition from a core, and the shell included less Ni and more Mn than the core.

### Experimental Example 3: X-ray Photoelectron Spectroscopy (XPS) Analysis

The composition of the positive active materials for a rechargeable lithium battery according to Examples 1 and 2 and Comparative Examples 1 to 3 was analyzed depending on a depth from the surface in an X-ray photoelectron spectroscopy method by using a K-alpha (Thermo Fisher Scientific Inc.) depending on a depth from the surface.

XPS analysis data of the positive active material for a rechargeable lithium battery according to Examples 1 and 2 and Comparative Example 1 are provided in the following Table 1.

**(Table 2)**

| Depth from the surface (nm) | | 5 | 30 | 60 |
|---|---|---|---|---|
| Comparative Example 1 | [Ni]/[Ni+Co+Mn] (mol%) | 68 | 66 | 69 |
| | [Co]/[Ni+Co+Mn] (mol%) | 17 | 15 | 15 |
| | [Mn]/[Ni+Co+Mn] (mol%) | 15 | 19 | 17 |
| Example 1 | [Ni]/[Ni+Co+Mn] (mol%) | 48 | 46 | 47 |
| | [Co]/[Ni+Co+Mn] (mol%) | 15 | 18 | 14 |
| | [Mn]/[Ni+Co+Mn] (mol%) | 37 | 36 | 39 |
| Example 2 | [Ni]/[Ni+Co+Mn] (mol%) | 30 | 32 | 30 |
| | [Co]/[Ni+Co+Mn] (mol%) | 12 | 9 | 12 |
| | [Mn]/[Ni+Co+Mn] (mol%) | 59 | 59 | 58 |

As shown in Table 2, the positive active materials for a rechargeable lithium battery according to Examples 1 and 2 had a shell composition including less Ni and more Mn than a metal composition of a core precursor, Ni_{0.7}CO_{0.15}Mn_{0.15} (OH)₂.

The positive active materials for a rechargeable battery according to Examples 1 and 2 included a shell including much Mn having no reaction with an electrolyte solution on the surface during the charge and discharge and less Ni that directly reacts with the electrolyte solution, such that it can realize an excellent cycle-life characteristic.

### Experimental Example 4: Nano-Secondary Ion Mass Spectroscopy Analysis

The positive active materials for a rechargeable lithium battery according to Examples 1 and 2 and Comparative Examples 1 to 3 were molded by using AMECA Nano SIMS 50 equipment (CAMECA SAS), polished, and coated with PT on the surface after making a cross-section of particles, and then a Mn element on the cross-section of the positive active materials was mapped by performing nano-secondary ion mass spectroscopy (nano-SIMS) analysis.

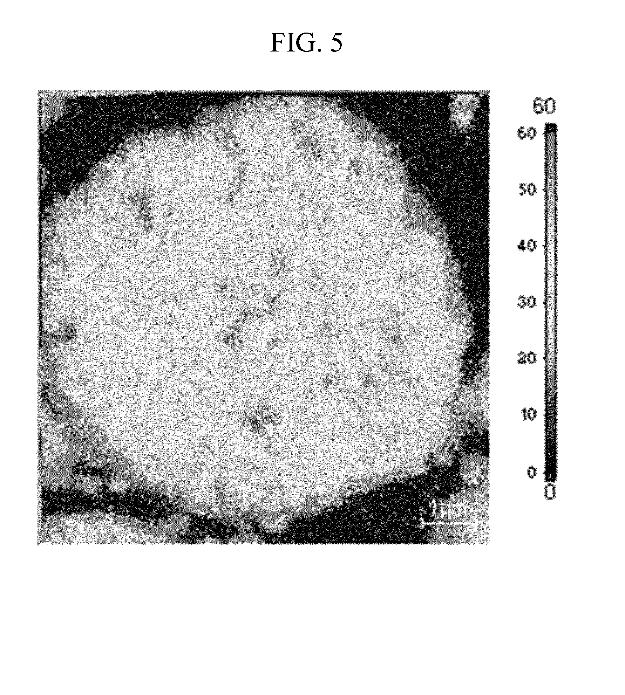

A nano-SIMS Mn element mapping photograph of the positive active material for a rechargeable lithium battery according to Example 2 is provided in FIG. 5.

As shown in FIG. 5, a lot of Mn was distributed on the surface of the positive active material for a rechargeable lithium battery according to Example 2.

### Experimental Example 5: X-ray Diffraction (XRD) Measurement

X-ray diffraction analysis of the positive active materials for a rechargeable lithium battery according to Examples 1 and 2 and Comparative Examples 1 to 3 was performed. In the X-ray diffraction analysis, a Cu-Kα ray was used as a light source.

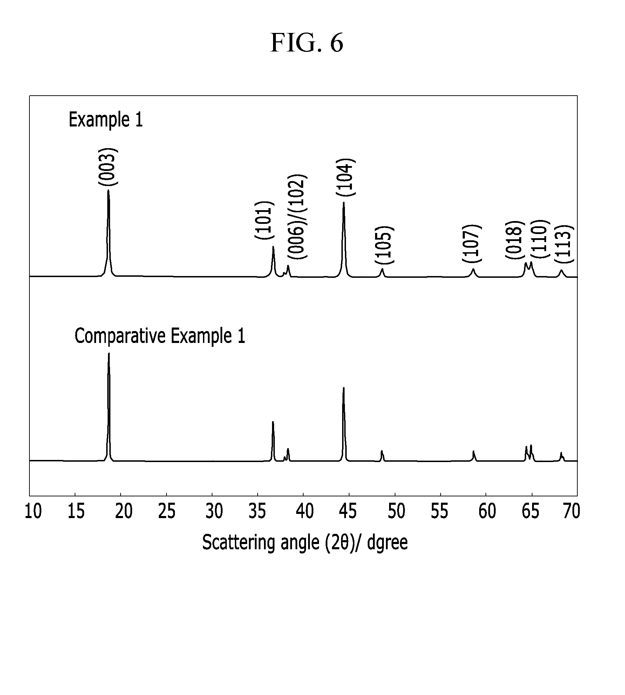

An XRD graph of the positive active material for a rechargeable lithium battery according to Example 1 and Comparative Example 1 is provided in FIG. 6.

Referring to FIG. 6, the positive active material for a rechargeable lithium battery according to Comparative Example 1 had a typical layered structure (R-3m) showing peaks of 003, 104, and 101. On the other hand, the positive active material for a rechargeable lithium battery according to Example 1 also showed peaks of 003, 104, and 101, and thus had a typical layered structure (R-3m), and herein, each peak showed a wider full width at half maximum due to composition or structure change of a core and a shell.

In addition, the positive active material for a rechargeable lithium battery according to Comparative Example 1 showed a lattice constant of a=2.87 Å and c=14.21 Å, the positive active material for a rechargeable lithium battery according to Example 1 showed a lattice constant of a=2.87 Å and c=14.23 Å, and the positive active material for a rechargeable lithium battery according to Example 2 showed a lattice constant of a=2.87 Å and c=14.23 Å. The results showed that a lattice constant increased toward a c direction to balance charges, since Ni was substituted for Mn, and the oxidation number of the Ni changed from Ni³⁺ (0.60 Å) to Ni²⁺ (0.69 Å) when a shell was formed in Examples 1 and 2.

### Experimental Example 6: Transmission Electron Microscope (TEM) Photograph Analysis

The positive active materials for a rechargeable lithium battery according to Examples 1 and 2 and Comparative Examples 1 to 3 were respectively deposited on a copper grid coated with carbon to manufacture specimens, and TEM photographs of the cross-sections of the specimens were taken by using a JEOL JEM-2100F equipment (JEOL Ltd.).

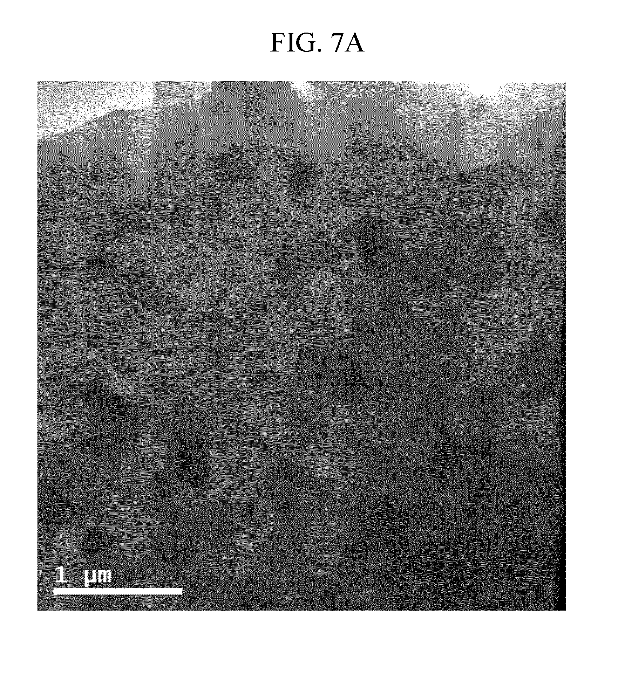

TEM photographs of the positive active material for a rechargeable lithium battery according to Example 2 are provided in FIGS. 7A to 7F.

FIG. 7A is a TEM photograph showing the cross-section of the positive active material powder particle for a rechargeable lithium battery according to Example 2,

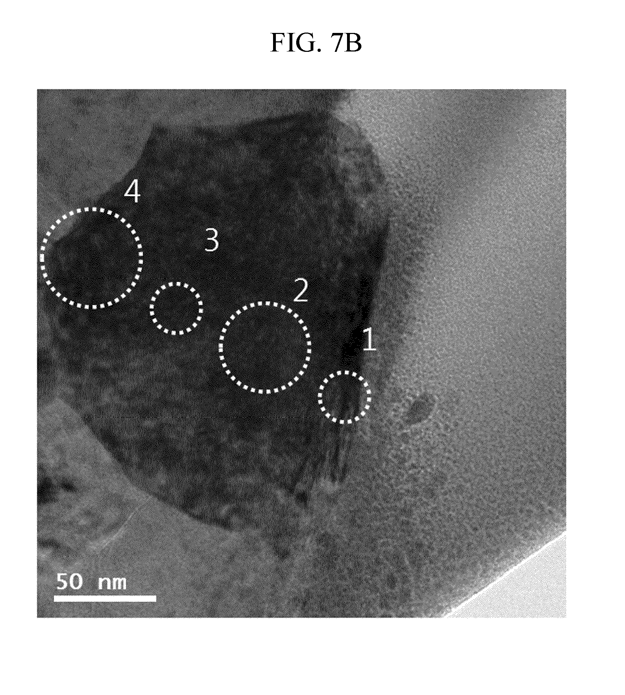

FIG. 7B is a TEM photograph showing the cross-section of a primary particle positioned at the surface of the positive active material powder for a rechargeable lithium battery according to Example 2,

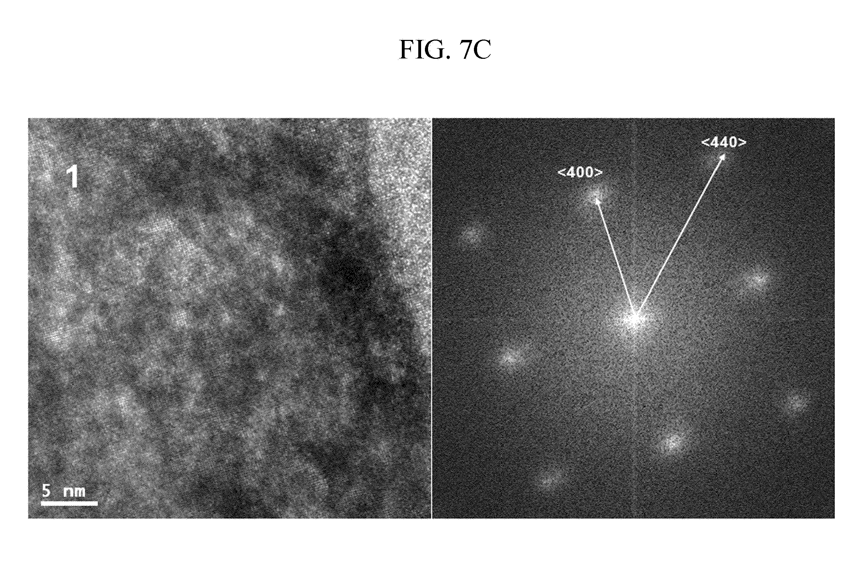

FIG. 7C is a 10-times enlarged view of the No. 1 position of FIG. 7B,

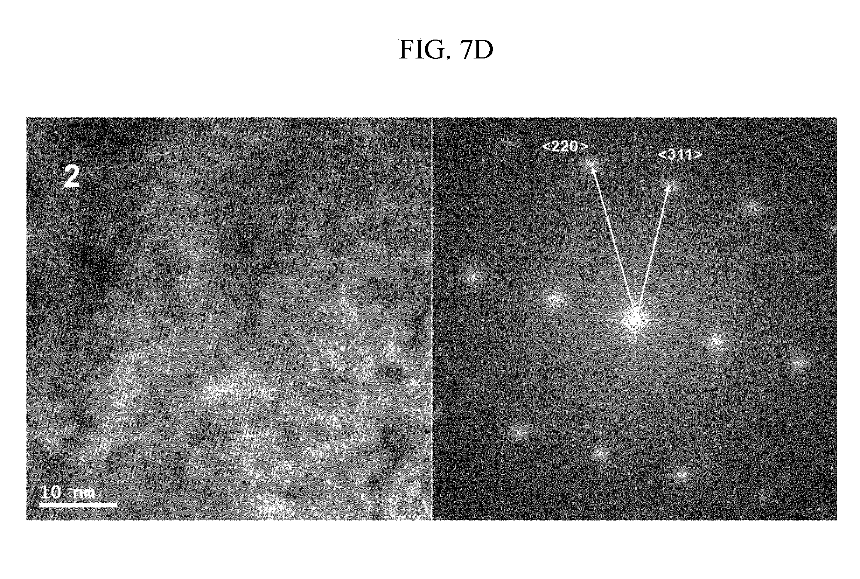

FIG. 7D is a 5-times enlarged view of the No. 2 position of FIG. 7B,

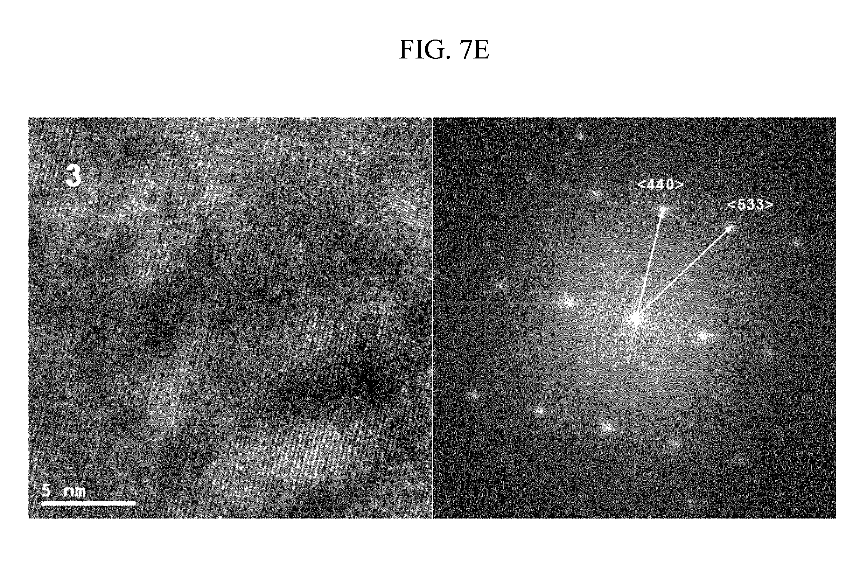

FIG. 7E is a 10-times enlarged view of the No. 3 position of FIG. 7B, and

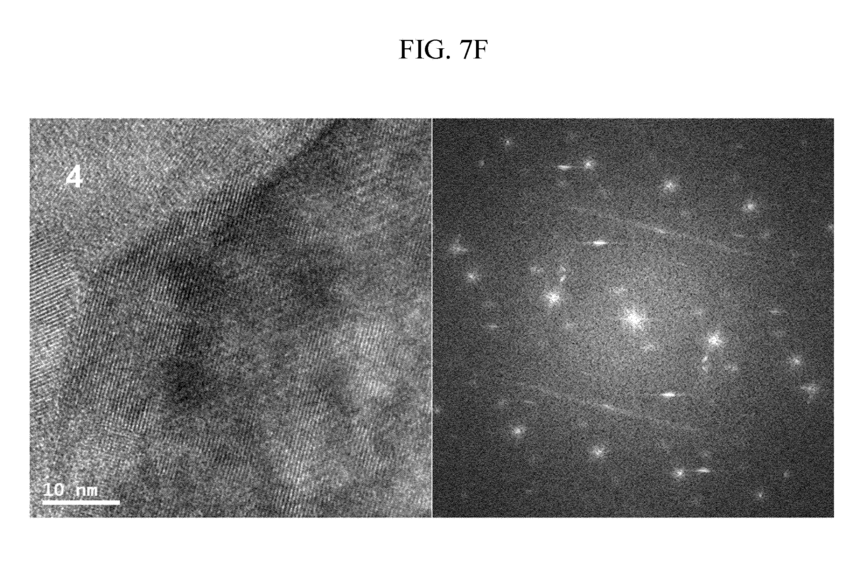

FIG. 7F is a 5-times enlarged view of the No. 4 position of FIG. 7B.

As shown in FIGS. 7A and 7B, the positive active material for a rechargeable lithium battery according to Example 2 included secondary particles formed of primary particles having a size of about 200 nm to about 500 nm.

Referring to FIGS. 7C to 7E, the positive active material for a rechargeable lithium battery according to Example 2 showed a spinel structure of Fd-3m on the surface.

FIG. 7F shows various patterns on the internal boundary of the primary particles of the positive active material for a rechargeable lithium battery according to Example 2.

### Experimental Example 7: Cycle-life Characteristics

The coin-type half cells according to Examples 3 and 4 and Comparative Examples 4 to 6 were charged and discharged 40 times at 60 °C, 3.0 V to 4.5 V, and at a 0.5 C-rate, and discharge capacity change of the coin-type half cells was measured.

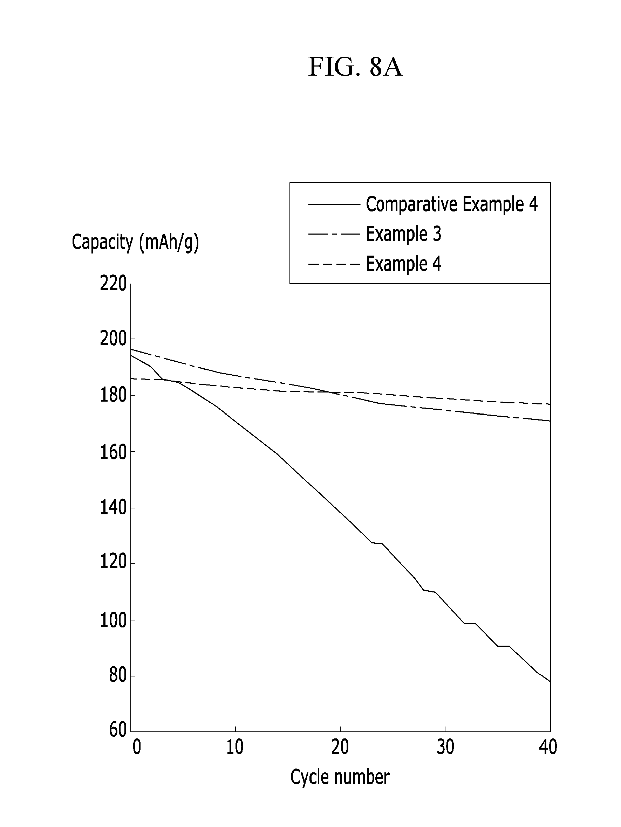

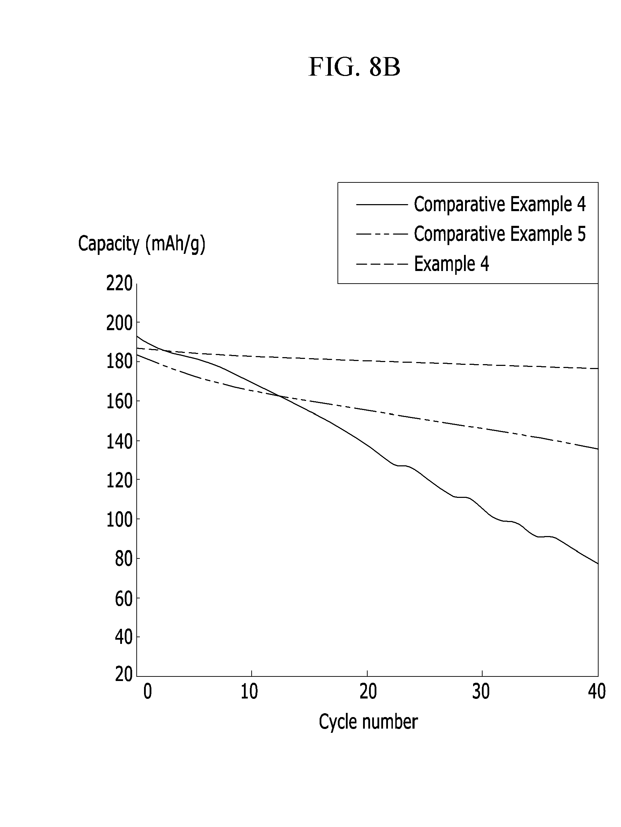

The results of Examples 3 and 4 and Comparative Example 4 are provided in FIG. 8A and the following Table 3. In addition, the results of Example 4 and Comparative Examples 4 and 5 are provided in FIG. 8B.

**(Table 3)**

| | Initial discharge capacity (mAh/g) | Discharge capacity after 40 cycles (mAh/g) | Cycle-life retention rate (%) |
|---|---|---|---|
| Comparative Example 4 | 193 | 80 | 40 |
| Example 3 | 194 | 170 | 88 |
| Example 4 | 191 | 180 | 94 |

As shown in FIG. 8A and Table 3, the coin-type half cells according to Examples 3 and 4 showed excellent cycle-life characteristics compared with the coin-type half cell according to Comparative Example 4.

In addition, referring to FIG. 8B, the coin-type half cell according to Example 4 showed an excellent cycle-life characteristic compared with the coin-type half cells according to Comparative Examples 4 and 5.

### Experimental Example 8: Evaluation of Rate Capability

The coin-type half cells according to Examples 3 and 4 and Comparative Examples 4 to 6 were respectively charged and discharged three times at 60 °C, 3.0 V to 4.5 V, and at a 0.1 C-rate, a 0.2 C-rate, a 0.5 C-rate, a 1 C-rate, and a 2 C-rate, and discharge capacity change of the coin-type half cells was measured at each rate.

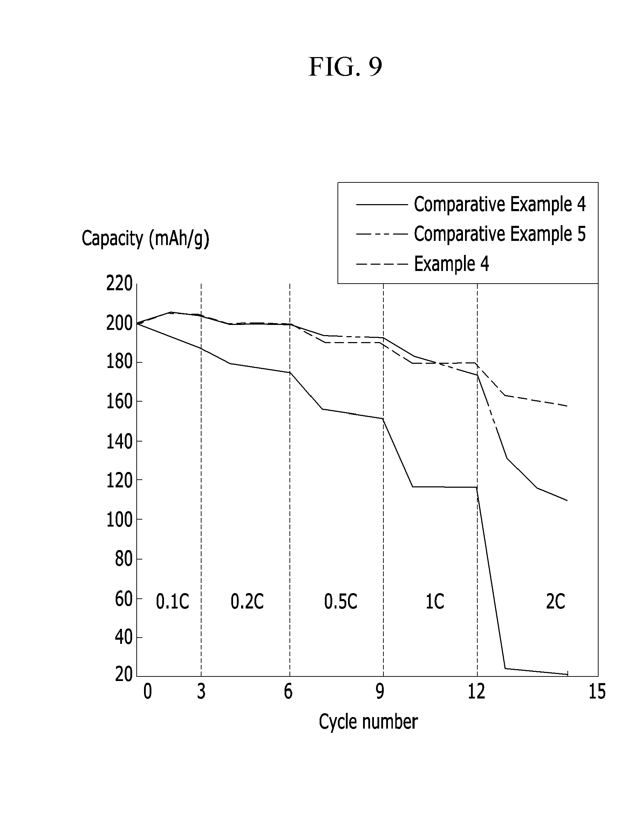

The results of the coin-type half cells according to Example 4 and Comparative Examples 4 and 5 are provided in FIG. 9 and the following Table 4.

**(Table 4)**

| | 0.1 C discharge capacity (mAh/g) | 0.2 C discharge capacity (mAh/g) | 0.5 C discharge capacity (mAh/g) | 1 C discharge capacity (mAh/g) | 2C discharge capacity (mAh/g) |
|---|---|---|---|---|---|
| Comparative Example 4 | 196 | 180 | 160 | 120 | 30 |
| Comparative Example 5 | 195 | 195 | 192 | 180 | 130 |
| Example 4 | 193 | 193 | 190 | 180 | 160 |

As shown in FIG. 9 and Table 4, the coin-type half cell according to Example 4 showed excellent rate capability compared with the coin-type half cells according to Comparative Examples 4 and 5.

### Experimental Example 9: Thermal Characteristics Evaluation

The coin-type half cells according to Examples 3 and 4 and Comparative Examples 4 to 6 were respectively charged up to 4.5 V at 60 °C and at a 0.5 C-rate, and then decomposed.

Shimadzu DSC-60 equipment (Shimadzu Co.) was used to perform differential scanning calorimetry (DSC) analysis regarding the electrode plate material of the decomposed positive electrode.

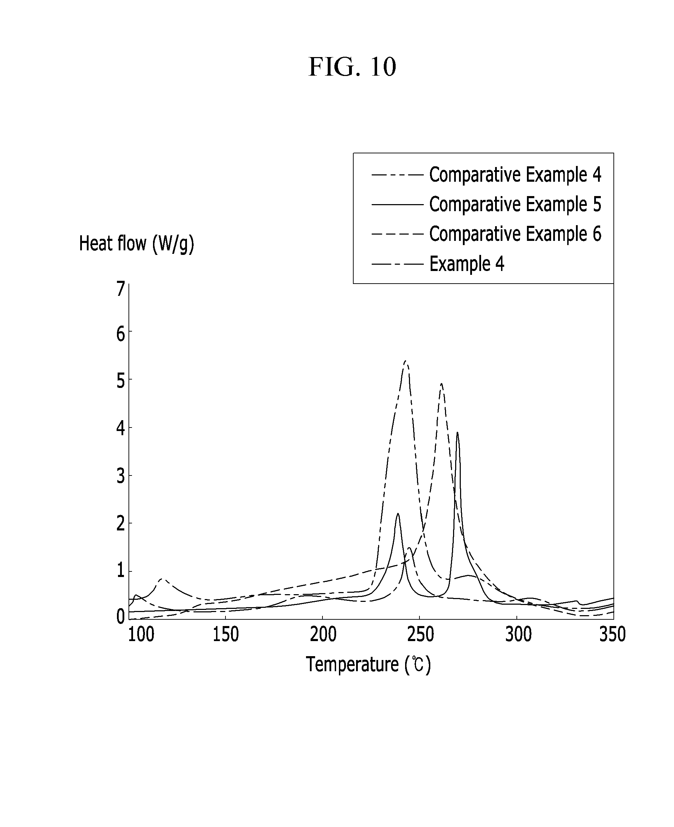

The results of Example 4 and Comparative Examples 4 to 6 are provided in FIG. 10.

Referring to FIG. 10, Example 4 showed a lower exothermic amount than Comparative Examples 4 to 6. In addition, Example 4 showed a higher onset temperature than Comparative Examples 4 to 6.

Accordingly, the coin-type half cell according to Example 4 showed excellent thermal characteristics compared with the coin-type half cells according to Comparative Examples 4 to 6.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### [Description of Symbols]

10: positive active material for a rechargeable lithium battery
11: core
13: shell
11': core precursor
13': shell precursor
15: capping agent
17: solvent
100: rechargeable lithium battery
112: negative electrode
114: positive electrode
113: separator
120: battery case
140: sealing member

## Claims

1. A positive active material for a rechargeable lithium battery, comprising:
a core comprising a lithium metal composite oxide having a layered structure; and
a shell comprising a lithium metal composite oxide having a layered structure and having a different composition from the core, a lithium metal composite oxide having a spinel structure, or a combination thereof,
wherein the shell is positioned on the surface of the core.

2. The positive active material of claim 1, wherein the lithium metal composite oxide having a layered structure included in the core is a compound represented by the following Chemical Formula 1,
the lithium metal composite oxide having a layered structure included in the shell is a compound represented by the following Chemical Formula 2, and
the lithium metal composite oxide having a spinel structure included in the shell is a compound represented by the following Chemical Formula 3:
[Chemical Formula 1] Liₖ₁M¹_{1-x1-y1}M²ₓ₁M³_{y1}Oₙ₁
[Chemical Formula 2] Liₖ₂M¹_{1-x2-y2}M²ₓ₂M³_{y2}Oₙ₂
[Chemical Formula 3] Liₖ₃[M¹_{1-x3-y3}M²ₓ₃M³_{y3}]ₘ₃Oₙ₃
wherein, in the above Chemical Formulae 1 to 3,
M¹ to M³ are different and are each independently Ni, Co, Mn, Al, Mg, Ba, Ti, V, Zr, Fe, Cu, or Sr,
0.98≤k1≤1.02, 0≤x1<0.2, 0≤y1<0.3, 0<x1 +y1<0.5 and 1.98≤n1≤2,
0.98≤k2≤1.02, 0≤x2<0.2, 0<y2<0.5, 0<x2+y2<0.7, y2>y1, and 1.98≤n2≤2, and
0.98≤k3≤1.02, 0≤x3≤0.15, 0.55≤y3≤0.75, 1.98≤m3≤2, and 3.98≤n3≤4.

3. The positive active material of claim 2, wherein the M¹ is Ni, and the M² and M³ are different and are each independently Co, Mn, Al, Mg, Ba, Ti, V, Zr, Fe, Cu, or Sr.

4. The positive active material of claim 2, wherein the M¹ is Ni, the M² is Co, and the M³ is Mn.

5. The positive active material of claim 1, wherein the core has a spherical shape, an oval shape, or a combination thereof.

6. The positive active material of claim 1, wherein the core has an average diameter of 5 µm to 15 µm.

7. The positive active material of claim 1, wherein the shell comprises the lithium metal composite oxide having a spinel structure.

8. The positive active material of claim 1, wherein the compound included in the shell has a concentration gradient.

9. The positive active material of claim 2, wherein in the compound of the shell, a concentration of the M¹ decreases from a core side to an outer surface, and a concentration of the M³ increases from a core to an outer surface.

10. The positive active material of claim 1, wherein the shell has a thickness of 100 nm to 700 nm.

11. A method of preparing a positive active material for a rechargeable lithium battery, comprising:
preparing a core precursor including a compound represented by the following Chemical Formula 4;
mixing a shell precursor including a water-soluble metal salt including M², M³, or a combination thereof (wherein M² and M³ are different from each other and are independently Ni, Co, Mn, Al, Mg, Ba, Ti, V, Zr, Fe, Cu, or Sr), a capping agent, and a solvent to prepare a coating composition;
mixing the core precursor with the coating composition to form a mixture;
heat-treating the mixture to form a core-shell precursor; and
mixing the core-shell precursor with a lithium source and firing the mixture:
[Chemical Formula 4] M¹_{1-x1-y1}M²ₓ₁M³_{y1}(OH)₂
wherein, in the above Chemical Formula 4,
M¹ to M³ are different and are each independently Ni, Co, Mn, Al, Mg, Ba, Ti, V, Zr, Fe, Cu, or Sr,
0≤x1<0.2, 0≤y1<0.3, and 0<x1 +y1<0.5.

12. The method of claim 11, wherein the water-soluble metal salt comprises compounds represented by the following Chemical Formulae 5 to 10 or a combination thereof:
[Chemical Formula 5] M²(CH₃COO)_{z1}
[Chemical Formula 6] M³(CH₃COO)_{z2}
[Chemical Formula 7] M²(NO₃)_{z3}
[Chemical Formula 8] M³(NO₃)_{z4}
[Chemical Formula 9] M²(SO₄)_{z5}
[Chemical Formula 10] M³(SO₄)_{z6}
wherein, in the above Chemical Formulae 5 to 10,
M² and M³ are different and are each independently Ni, Co, Mn, Al, Mg, Ba, Ti, V, Zr, Fe, Cu, or Sr,
2≤z1≤3, 2≤z2≤3, 1≤z3≤3, 1≤z4≤3, 1≤z5≤3, and 1≤z6≤3.

13. The method of claim 11, wherein in the process of preparing the coating composition, the shell precursor is mixed in an amount of greater than or equal to 10 parts by weight and less than 30 parts by weight based on 100 parts by weight of the core precursor.

14. The method of claim 11, wherein in the process of preparing the coating composition, the shell precursor is mixed in an amount of 30 parts by weight to 80 parts by weight based on 100 parts by weight of the core precursor.

15. The method of claim 11, wherein the capping agent comprises polyacrylic acid (PAA), poly(vinylpyrrolidone), or a combination thereof.

16. The method of claim 11, wherein the solvent comprises water, alcohol, or a combination thereof.

17. The method of claim 11, wherein the heat-treating is performed at a temperature of 250 °C to 600 °C.

18. The method of claim 11, wherein the firing is performed at a temperature of 750 °C to 900 °C.

19. A rechargeable lithium battery comprising
a positive electrode including a positive active material;
a negative electrode including a negative active material; and
an electrolyte,
wherein the positive active material is the positive active material for a rechargeable lithium battery according to any one of claim 1 to claim 10.
